# FASCICULE DE BREVET EUROPEEN

(11) **EP 4 261 497 B1**
(45) Date de publication et mention de la délivrance du brevet: **25.12.2024**
(21) Numéro de dépôt: 23167168.6
(22) Date de dépôt: 06.04.2023
(51) Int. Cl.: G01B 11/25

(54) **PROCÉDÉ DE MESURE TOPOGRAPHIQUE ET MACHINE DE MESURE TOPOGRAPHIQUE**
TOPOGRAPHISCHES MESSVERFAHREN UND TOPOGRAPHISCHE MESSMASCHINE
TOPOGRAPHIC MEASUREMENT METHOD AND TOPOGRAPHIC MEASUREMENT MACHINE

(30) Priorité: 11.04.2022 FR 2203324
(43) Date de publication de la demande: 18.10.2023
(73) Titulaire: Insidix, 38360 Noyarey (FR)
(72) Inventeur: BRAISAZ, Régis, 38140 REAUMONT (FR); VERNHES, Pierre, 38410 SAINT_MARTIN D'URIAGE (FR)
(74) Mandataire: Talbot, Alexandre

(56) Documents cités:
- JP-A- 2012 233 782
- US-A1- 2021 080 252
- US-A1- 2021 310 791

## Description

### Domaine technique

L'invention concerne un procédé de mesure topographique et une machine de mesure topographique.

### État de la technique

Dans de nombreux domaines techniques, on utilise des éléments qui font saillie d'une surface principale. Ces éléments en saillie doivent avoir une forme et des dimensions les mieux maitrisées possibles. A titre d'exemple, les éléments en saillie sont des plots électriquement conducteurs qui vont servir de contact électrique pour une puce électronique ou tout autre dispositif électronique. La bonne maîtrise dimensionnelle des éléments en saillie permet d'assurer un contact électrique performant.

Il est important de pouvoir mesurer le plus précisément possible et le plus rapidement possible la forme et les dimensions des multiples éléments en saillie.

Il est connu de réaliser une mesure des dimensions des éléments en saillie au moyen d'un procédé optique. On applique une lumière texturée sur la surface d'un échantillon qui possède de multiples éléments saillants. La lumière texturée définit une pluralité de motifs répétitifs qui sont appliqués sur la surface de l'échantillon.

Plusieurs images sont acquises de la surface de l'échantillon qui est éclairée par la lumière texturée. En analysant les différentes images, il est possible de calculer les dimensions et la forme des éléments en saillie.

La qualité de la mesure est fortement dépendante de la qualité des images qui ont été acquises. Il existe donc un besoin d'améliorer la qualité des images qui servent lors des étapes de calcul des dimensions et de la forme des éléments en saillie.

US 2021/0310791 décrit une machine de mesure topographique pour la mesure optique d'un échantillon comportant une pluralité de motifs saillants.

### Exposé de l'invention

Un objet de l'invention consiste à fournir un procédé de mesure topographique qui est plus performant que les procédés de l'art antérieur.

On tend à atteindre ce résultat au moyen d'un procédé de mesure topographique qui comporte :
- fournir un échantillon comportant une première surface munie d'une pluralité de motifs saillants ;
- acquérir une pluralité d'images de la première surface de l'échantillon, la pluralité d'images comportant des images de référence de l'échantillon, chaque image de référence correspondant à l'échantillon éclairé avec une lumière structurée, les lumières structurées des images de référence définissant chacune plusieurs motifs répétitifs et se distinguant les unes des autres par la phase et/ou la fréquence des motifs répétitifs.

Le procédé est remarquable en ce que la pluralité d'images comporte au moins une première série d'images de la première surface de l'échantillon, la première série d'images étant acquise lorsque la première surface de l'échantillon est éclairée par une première lumière structurée, la première lumière structurée définissant plusieurs motifs répétitifs et les images de la première série d'images se distinguant les unes des autres par l'angle d'application de la première lumière structurée par rapport à la première surface ;
- comparer les images de la première série d'images de manière à déterminer la présence d'au moins un artefact sur au moins une image de la première série d'images ;
- former au moins une image de travail au moins à partir de la première série d'images, la au moins une image de travail étant dépourvue dudit au moins un artéfact ou réduisant l'étendue dudit au moins un artefact ;
- calculer au moins une grandeur représentative de l'échantillon à partir de la au moins une image de travail et des images de référence.

Préférentiellement, la première série d'images comporte une image des images de référence et la au moins une image de travail remplace ladite image des images de référence.

Préférentiellement, la pluralité d'images possède plusieurs premières séries d'images qui comportent chacune une image des images de référence. Chaque première série d'images est utilisée pour former une image de travail dépourvue d'au moins un artefact ou ayant un artefact d'étendue réduite. Chaque image de travail remplace une des images de référence.

Préférentiellement, la pluralité d'images comporte au moins une deuxième série d'images de la première surface de l'échantillon, la deuxième série d'images étant acquise lorsque la première surface de l'échantillon est éclairée par la première lumière structurée, les images de la deuxième série d'images se distinguant les unes des autres par leur durée d'exposition, l'angle d'application de la première lumière structurée étant constant pour la deuxième série d'images et correspondant à un des angles de la première série d'images. Le procédé de mesure comporte :
- comparer les images de la deuxième série d'images de manière à déterminer la présence d'au moins un artefact sur au moins une image de la deuxième série d'images et
- former au moins une image de travail au moins à partir de la deuxième série d'image, la au moins une image de travail étant dépourvue dudit au moins un artéfact ou réduisant l'étendue de l'artefact.

Préférentiellement, la deuxième série d'images comporte une image des images de référence. La au moins une image de travail formée à partie de la deuxième série d'images remplace ladite image des images de référence.

Préférentiellement, une image des images de référence appartient à la première série d'images et à la deuxième série d'images. La première série d'images et la deuxième série d'image sont utilisées pour former une image de travail qui remplace ladite image des images de référence.

Préférentiellement, la pluralité d'images possède plusieurs deuxièmes séries d'images qui comportent chacune une image des images de référence. Chaque deuxième série d'images est utilisée pour former une image de travail dépourvue d'au moins un artefact ou ayant un artefact d'étendue réduite. Chaque image de travail remplace des images des images de référence.

Préférentiellement, la pluralité d'images comporte au moins une troisième série d'images de la première surface de l'échantillon, la troisième série d'images étant acquise lorsque la première surface de l'échantillon est éclairée par une deuxième lumière structurée, les images de la troisième série d'images se distinguant les unes des autres par la couleur de la lumière structurée, l'angle d'application de la deuxième lumière structurée étant constant pour la troisième série d'images et correspondant à un des angles de la première série d'images. Le procédé de mesure comporte :
- comparer les images de la troisième série d'images de manière à déterminer la présence d'au moins un artefact sur au moins une image de la troisième série d'images et
- former au moins une image de travail au moins à partir de la troisième série d'images, la au moins une image de travail étant dépourvue dudit au moins un artefact ou réduisant l'étendue de l'artefact.

Préférentiellement, comparer les images de la première série d'images comporte identifier un déplacement d'une zone dont la luminosité est supérieure à la luminosité moyenne de l'image de la première série en fonction de l'angle d'application de la première lumière structurée, l'artefact étant une réflexion parasite.

Préférentiellement, comparer les images de la première série d'images comporte identifier une évolution de l'étendue d'une zone dont la luminosité est inférieure à la luminosité moyenne de l'image de la première série en fonction de l'angle d'application de la première lumière structurée, l'artefact étant un ombrage.

Préférentiellement, comparer les images de la première série d'images comporte extraire les évolutions d'intensité lumineuse des motifs répétitifs issu de la lumière structurée et comparer lesdites évolutions d'intensité lumineuse.

L'invention a également pour objet une machine de mesure topographique qui est plus performante que les machines de l'art antérieur et qui permet de calculer plus précisément des grandeurs de l'échantillon.

On tend à atteindre ce résultat au moyen d'une machine de mesure topographique qui comporte :
- - un support ayant une surface destinée à supporter un échantillon ;

- des moyens de projection configurés pour émettre différentes lumières structurées, les lumières structurées définissant chacune plusieurs motifs répétitifs et se distinguant les unes des autres par la phase et/ou la fréquence des motifs répétitifs ;
- des moyens de capture d'image configurés pour acquérir des images de l'échantillon éclairé par l'une des différentes lumières structurées ;
- un circuit de commande configuré pour acquérir plusieurs images de référence de l'échantillon éclairé par différentes lumières structurées, les lumières structurées des images de référence définissant chacune plusieurs motifs répétitifs et se distinguant les unes des autres par la phase et/ou la fréquence des motifs répétitifs.

La machine de mesure topographique est remarquable en ce que :
- les moyens de projection sont configurés pour définir plusieurs angles d'application de la lumière structurée par rapport à la surface du support ;
- le circuit de commande est configuré pour acquérir une première série d'images de l'échantillon éclairé par une première lumière structurée, la première lumière structurée définissant plusieurs motifs répétitifs et les images de la première série d'images se distinguant les unes des autres par l'angle d'application de la première lumière structurée par rapport à la surface du support ;
- le circuit de commande est configuré pour comparer les images de la première série d'images de manière à déterminer la présence d'au moins un artefact sur au moins une image de la première série d'images ;
- le circuit de commande est configuré pour former au moins une image de travail au moins à partir de la première série d'images, la au moins une image de travail étant dépourvue dudit au moins un artéfact ou réduisant l'étendue dudit au moins un artefact ;
- le circuit de commande est configuré pour calculer au moins une grandeur représentative de l'échantillon à partir de la au moins une image de travail et des images de référence.

### Description des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :
- la figure 1 illustre, de manière schématique, une machine de mesure topographique ;
- la figure 2 est une photographie d'un échantillon possédant des motifs saillants sous la forme de demi-sphère éclairée par une lumière uniforme ;
- la figure 3 illustre, de manière schématique, un procédé de mesure topographique.

### Description détaillée

Lorsqu'un échantillon possède un ou plusieurs éléments saillants qui sont disposés en saillie d'une première surface d'un substrat, il est intéressant de caractériser l'échantillon et préférentiellement le ou les éléments saillants, c'est-à-dire qu'il est intéressant de calculer des grandeurs représentatives de l'échantillon et plus préférentiellement calculer des grandeurs représentatives du ou des éléments saillants. Une manière rapide est d'utiliser une caractérisation optique en prenant plusieurs images de l'échantillon. Il est donc important d'obtenir des images de bonne qualité pour en déduire le plus précisément possible la ou les grandeurs de l'échantillon et plus particulièrement des éléments en saillie.

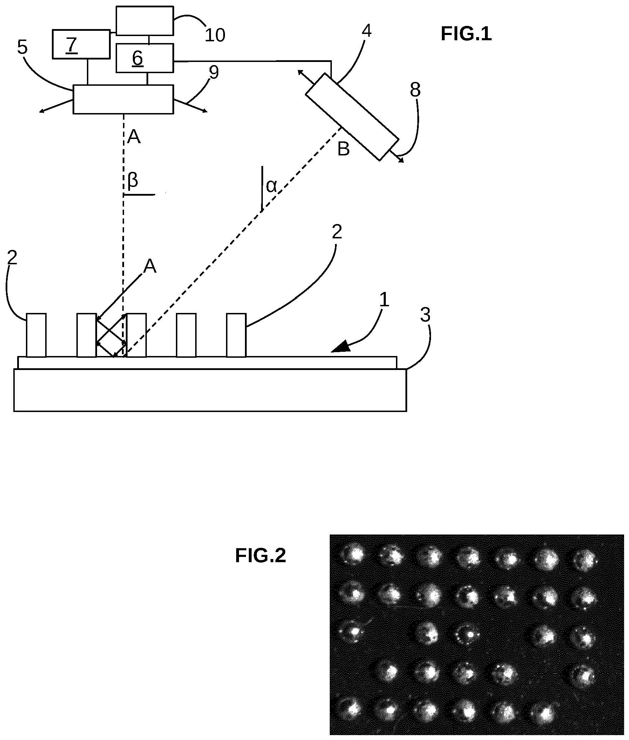

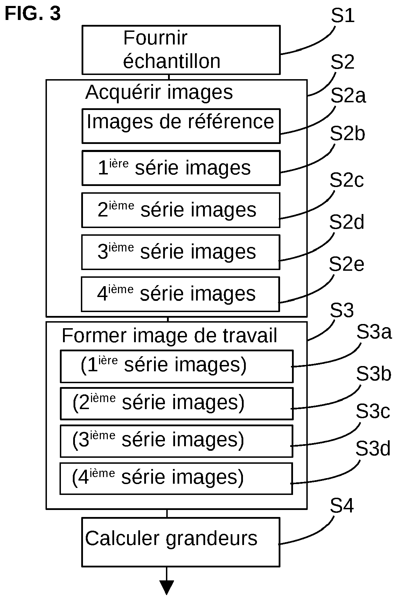

Dans une première étape S1 illustrée à la figure 3, on fournit un échantillon 1 qui comporte une première surface munie d'une pluralité de motifs saillants 2 (voir figure 1). L'échantillon 1 est disposé sur un support 3. Les motifs saillants 2 peuvent être de forme quelconque. Cependant, il est particulièrement avantageux que les motifs saillants 2 soient sous la forme de sphères ou de demi-sphères, de cônes, de pavés droits ou d'autres formes simples ce qui facilite le calcul de la forme ainsi que le calcul des dimensions transversales des motifs saillants 2. Les dimensions transversales sont des dimensions mesurées selon des directions perpendiculaires à l'axe de la normale du support 3 qui supporte l'échantillon 1 et qui représente également la normale à la première surface. La normale à la première surface est représentée par l'axe A illustré à la figure 1 qui représente une machine de mesure topographique apte à mettre en oeuvre le procédé de mesure.

Les motifs saillants 2 peuvent être réalisés dans tout matériau possible. Cependant, il ressort que le procédé est particulièrement avantageux lorsque les motifs saillants 2 sont réalisés en matériau métallique et plus généralement dans des matériaux qui réfléchissent la lumière. Il a été observé que les motifs en matériaux métalliques réfléchissent la lumière ce qui a pour effet de générer des artefacts. Il a été également observé que l'émission d'une lumière texturée depuis des moyens de projection 4 vers les motifs saillants 2 génère un phénomène d'ombrage ce qui a pour effet qu'une face des motifs saillants 2 est mieux éclairée que les autres. Ce phénomène s'accentue au fur et à mesure que l'on s'éloigne de la normale à la première surface.

Le procédé de mesure topographique comporte l'éclairage de la première surface de l'échantillon 1 au moyen d'une lumière structurée. La lumière structurée définit plusieurs motifs répétitifs par exemple plusieurs franges. L'éclairage de la première surface est réalisé par des moyens de projection 4. La lumière structurée peut être une image en nuances de gris ou en nuance d'autres couleurs et éventuellement en noir et blanc. La lumière structurée définit des motifs qui se répètent avec une fréquence prédéfinie et une phase prédéfinie. Les moyens de projection 4 comportent avantageusement un projecteur configuré pour projeter la lumière structurée de préférence dans le domaine visible.

La lumière structurée forme avantageusement un réseau de franges, par exemple de type moiré ou « shadow moiré ». Dans un mode de réalisation, le projecteur émet directement un réseau de franges. Dans une variante de réalisation, la lumière structurée est formée au moyen d'un masque qui est traversé par la lumière provenant du projecteur. Le masque comporte des ouvertures et des zones opaques, par exemple sous la forme d'un réseau de Ronchi. Il est également possible de combiner ces deux techniques.

Le procédé de mesure comporte, dans une étape S2, acquérir une pluralité d'images de la première surface de l'échantillon 1 et notamment une pluralité d'images de référence dans une étape S2a.

Les images de référence comportent la déformation des motifs répétitifs de la lumière structurée sur la surface de l'échantillon. L'angle d'application de la lumière structurée étant connu ainsi que le pas de répétition des motifs répétitifs, il est possible d'en déduire la déformation des motifs répétitifs et donc d'en déduire des informations relatives aux grandeurs relatives à l'échantillon. En utilisant plusieurs motifs répétitifs qui diffèrent les uns des autres par les pas de répétition et la phase des motifs répétitifs (éventuellement avec la taille des motifs répétitifs), il est alors possible de calculer des grandeurs relatives à l'échantillon

Dans une étape S4, les images de référence sont utilisées pour calculer au moins une grandeur de l'échantillon et préférentiellement une grandeur représentative de la pluralité de motifs saillants 2. De manière préférentielle, les images de référence sont utilisées pour calculer au moins une grandeur qui est choisie parmi la coplanarité des éléments saillants, la forme des éléments saillants dans un plan de coupe transversal, c'est-à-dire perpendiculaire à l'axe A, le pas de répétition des éléments saillants dans une ou plusieurs directions perpendiculaires à l'axe 1, une dimension transversale d'un moins un des motifs saillants, c'est-à-dire selon une direction perpendiculaire à l'axe A et la hauteur d'un ou de plusieurs motifs saillants c'est-à-dire la dimension selon l'axe A.

Pour acquérir des images, il est avantageux d'utiliser des moyens de capture d'image 5 qui sont configurés pour acquérir des images de la première surface de l'échantillon 1. Les moyens de capture d'image 5 comportent avantageusement une caméra qui est agencée pour capturer la lumière structurée appliquée sur la surface de l'échantillon 1. La caméra est adaptée pour fournir les mesures de topographie de la surface du système à partir de la lumière structurée capturée. Dans le mode de réalisation illustré, l'axe optique des moyens de capture d'image 5 est confondu avec la normale A à la surface du support 3.

Afin de caractériser l'échantillon, il est avantageux d'appliquer successivement différentes lumières structurées. Les lumières structurées définissent des motifs répétitifs, de préférence des franges. Pour réaliser la caractérisation de l'échantillon, on va acquérir une pluralité d'images de référence de la première surface de l'échantillon 1 dans une étape S2a. Chaque image de référence est acquise avec une lumière structurée différente des autres. Les lumières structurées se distinguent les unes des autres par la phase et/ou la fréquence des motifs répétitifs. En faisant varier la fréquence, on fait varier le pas de répétition des motifs répétitifs et il est également avantageux de faire varier la largeur des motifs, notamment des franges. En faisant varier la phase, on fait varier la position des franges sur l'échantillon, une zone blanche devient une zone noire ou d'une nuance de gris. En faisant varier la phase et la fréquence des motifs, l'homme du métier sait caractériser l'échantillon 1. L'évolution de l'intensité représentant le passage d'une zone blanche à une zone noire peut être de forme sinusoïdale, triangulaire, en escalier ou de toute autre forme adaptée.

L'acquisition de plusieurs images de référence qui se distinguent les unes des autres par la phase et la fréquence des motifs répétitifs, de préférence des franges permet de calculer les grandeurs représentatives de l'échantillon.

Les différentes images de référence sont analysées ensemble de manière à déterminer la topographie de l'échantillon selon une technique connue. On observe la déformation des franges sur la surface de l'échantillon pour en déduire les caractéristiques de l'échantillon et préférentiellement des motifs saillants.

Il est possible de calculer l'écartement entre deux motifs saillants 2, la hauteur de chaque motif saillant 2, les dimensions latérales de chaque motif saillant 2, la forme de chaque motif saillant 2 ainsi que la planéité de la surface qui reçoit les motifs saillants 2. Il est également possible de calculer la surface mathématique passant par le point le plus haut du motif saillant (selon l'axe A) pour chaque élément saillant 2. Il est encore possible de calculer la coplanarité des sommets des motifs saillants 2, c'est-à-dire déterminer si les sommets des motifs saillants 2 appartiennent à un même plan ou non et éventuellement l'amplitude (selon l'axe A) de la surface qui passe par tous les sommets des motifs saillants 2. Il est également possible de calculer des caractéristiques de la surface passant par les sommets des motifs saillants 2 et/ou des caractéristiques de la surface du substrat qui supporte les motifs saillants 2. Le calcul des caractéristiques peut être un calcul de type flèche (BOW) et torsion (TWIST).

Cependant, ces images présentent des artefacts qui empêchent une caractérisation plus précise de l'échantillon 1, il est donc important de réaliser l'acquisition d'images supplémentaires de manière à délivrer une caractérisation plus fine des grandeurs représentatives de l'échantillon et préférentiellement des motifs saillants.

La lumière structurée est émise selon un premier angle α par rapport à la première surface. Les moyens de projection 4 projettent la lumière structurée avec un premier angle α par rapport à la première surface de l'échantillon 1, également appelé angle d'application α. Le premier angle α est mesuré par rapport à la normale de la surface du support 3 qui supporte l'échantillon et qui correspond sensiblement à la normale de la première surface du substrat qui reçoit les motifs saillants. D'autres configurations sont possibles.

Afin d'améliorer la qualité de la caractérisation, il est avantageux d'acquérir plusieurs images dans des conditions différentes pour pouvoir déterminer la présence d'artefacts et pour être en mesure de supprimer ces artefacts ou a minima de réduire l'importance des artefacts. Les images additionnelles prises peuvent être utilisées pour remplacer une image de référence par une autre image de référence calculée de manière à réduire l'étendue d'au moins un artefact voire supprimer au moins un artefact ou pour ajouter une image de référence aux images de référence déjà prises de manière à réduire le poids des artefacts. Cela permet un calcul plus précis des grandeurs caractéristiques de l'échantillon.

Dans une étape S2b, il est avantageux d'acquérir au moins une première série d'images de la première surface de l'échantillon 1. La première série d'images est acquise lorsque la première surface de l'échantillon 1 est éclairée par une première lumière structurée. La première lumière structurée définit plusieurs motifs répétitifs prédéfinis et les images de la première série d'images se distinguent les unes des autres par l'angle d'application α de la première lumière structurée par rapport à la première surface.

Les moyens de projection 4 sont configurés pour appliquer la même première lumière structurée selon différentes valeurs de premier angle α. Le premier angle α est préférentiellement mesuré entre l'axe optique des moyens de projection 4 et la normale au plan du support 3 qui reçoit l'échantillon. Selon les configurations, les moyens de projection 4 comportent un projecteur mobile qui se déplace pour définir les multiples angles α. Il est également possible d'avoir plusieurs projecteurs, chaque projecteur étant associé à un angle prédéfini. Il est encore possible d'avoir plusieurs projecteurs mobiles.

Le premier angle α est avantageusement compris entre 5° et 175°, de préférence entre 10° et 170°, plus préférentiellement entre 25° et 155° et encore plus préférentiellement entre 25° et 55° et entre 115° et 155°. Les angles compris entre 0° et 90° correspondent à des moyens de projection 4 disposés d'un côté de l'échantillon, c'est-à-dire d'un côté du support et donc d'un côté des moyens de capture d'image 5, par exemple du côté droit sur la figure 1 tandis que les angles compris entre 90° et 180° correspondent à des moyens de projection 4 disposés de l'autre côté de l'échantillon, c'est-à-dire de l'autre côté du support et donc de l'autre côté des moyens de capture d'image 5, par exemple du côté gauche sur la figure 1. En utilisant des moyens de projection 4, par exemple deux projecteurs, capables d'éclairer successivement les deux faces opposées des motifs saillants 2, il est plus facile de mieux définir les contours des motifs saillants 2.

Parmi la pluralité d'images, on acquiert au moins une première série d'images de la première surface de l'échantillon 1. La première série d'images est acquise lorsque la première surface de l'échantillon 1 est éclairée par une première lumière structurée. La première lumière structurée définit plusieurs motifs répétitifs.

Il a été observé que lorsque des phénomènes de réflexion du rayonnement lumineux interviennent entre les motifs saillants 2, une partie de la lumière structurée émise est renvoyée aux moyens de capture 5 sous la forme d'une réflexion spéculaire ce qui génère l'apparition d'une zone très lumineuse sur au moins une partie des images. La zone très lumineuse est une zone dont la luminosité est supérieure à la luminosité moyenne de l'image. La zone très lumineuse est une zone à faible contraste ce qui rend plus difficile ou empêche d'observer les caractéristiques des motifs de la lumière structurée et notamment l'évolution de l'intensité lumineuse. La réflexion parasite et plus particulièrement la réflexion spéculaire génère un mauvais contraste local des motifs répétitifs projetés.

Le mauvais contraste introduit des artefacts et diminue la précision du calcul de reconstruction topographique. Il est alors plus difficile de caractériser l'échantillon, par exemple les caractéristiques des motifs saillants, plus particulièrement le bord du motif saillant 2, la forme du motif saillant 2 ou une arête. Cette zone très lumineuse crée un artefact qui rend plus difficile les mesures des grandeurs représentatives des motifs saillants 2. En modifiant l'angle d'application a, il est possible de déplacer les points de réflexion de la lumière structurée émise et donc de déplacer la position de la zone très lumineuse entre les images de la première série. En comparant, la position des zones très lumineuses sur les différentes images de la première série en fonction de la valeur de l'angle d'application, il est possible d'identifier un déplacement d'une zone très lumineuse en fonction de l'angle d'application α ce qui permet de déterminer la présence d'un artefact, dans le cas présent une réflexion parasite ou une réfraction.

La modulation de l'angle d'application α permet également de modifier les phénomènes d'ombrage ce qui permet de mieux déterminer les bords des motifs saillants 2 tout en conservant une lumière structurée qui est émise depuis un même côté du support et donc de l'échantillon. Un ombrage entraine l'apparition d'une zone faiblement lumineuse, c'est-à-dire une zone à faible contraste. A cause du faible contraste, il est difficile d'observer les motifs répétitifs de la lumière structurée et donc calculer les informations pertinentes relatives à l'échantillon, préférentiellement aux motifs saillants 2.

La modulation de l'angle d'application α permet également de réduire l'influence des phénomènes de réflexion multiples entre les motifs saillants. La réflexion multiple va réfléchir vers les moyens de capture 5 une intensité projetée qui devrait provenir d'une autre localisation sur l'échantillon. Cela fausse localement le calcul de reconstruction. Pour réduire l'influence des réflexions multiples, il est également avantageux de modifier la fréquence et/ou le pas de la lumière texturée.

A titre d'exemple, la figure 2 illustre un échantillon 1 possédant un substrat surmonté par des motifs saillant sensiblement sous la forme de demi-sphères. L'échantillon est éclairé par une lumière blanche uniforme appliquée avec un angle égal à 45°. Il apparait que les motifs saillants ne réfléchissent pas tous la lumière de la même manière et que les motifs saillants présentent tous une zone de réflexion spéculaire et une zone de pénombre. Il apparait également que le motif saillant central présente plusieurs points de réflexions représentant les réflexions des motifs saillants adjacents.

De manière générale, la modulation de l'angle d'application α permet de déterminer la présence d'au moins un artefact qui se présente sous la forme d'une zone à forte luminosité ou à faible luminosité et qui est la conséquence des phénomènes de réflexion, réfraction...

La modulation de l'angle d'application α autorise l'acquisition d'une pluralité d'images qui permettent de mieux déterminer les grandeurs représentatives de l'échantillon en facilitant la détermination des caractéristiques des motifs répétitifs, en réduisant l'étendue d'artefact et/ou en déplaçant des artefacts ce qui permet d'obtenir un contraste suffisant pour identifier la présence d'au moins une partie d'un motif répétitif de la lumière texturée.

Les images de la première série d'images se distinguent les unes des autres par la valeur de l'angle d'application α de la première lumière structurée par rapport à la première surface. La modulation de l'angle d'application α permet de modifier l'interaction entre l'échantillon et la lumière structurée. Chaque image correspond à une valeur connue de l'angle d'application a. La modulation de l'angle d'application α de la première lumière permet de modifier l'étendue des zones d'ombrage ainsi que l'angle de projection de la lumière structurée sur les parois latérales des motifs saillants 2 et donc les réflexions et les réfractions.

L'acquisition de plusieurs images pour former la première série d'images permet de mieux observer les motifs répétitifs de la lumière structurée ce qui permet de mieux identifier les caractéristiques dimensionnelles des motifs saillants 2 et préférentiellement lorsque la première série d'images comporte des images où la première lumière structurée est émise dans des directions opposées, c'est-à-dire avec des angles dont les valeurs sont positives et négatives, c'est-à-dire avec des moyens de projection 4 qui sont disposés d'un côté ou de l'autre de l'échantillon 1.

Il est particulièrement avantageux d'avoir des images de la première série d'images qui correspondent à des valeurs différentes de l'angle d'application α et qui sont émises depuis un même côté de l'échantillon et/ou depuis un même côté des moyens de capture 5. Par exemple au moins deux ou au moins trois images sont acquises lorsque la première lumière est appliquée sur l'échantillon 1, les images se distinguant l'une de l'autre par la valeur de l'angle d'application a, la première lumière étant émise d'un même côté du support 3. Par exemple, les trois images sont acquises pour trois valeurs d'angle α différentes qui se différencient l'une de l'autre d'au moins 10°. Par exemple, les trois images sont acquises pour des angles α compris entre 80° et 10°, de préférence entre 70° et 20°, encore plus préférentiellement entre 60° et 30°, par exemple à 55°, 45° et 35°.

L'utilisation de plusieurs images associées à des valeurs d'angles α de préférence dont la différence est inférieure à 30°, préférentiellement inférieure à 20° voire 15° ou 10° permet de suivre plus facilement le déplacement des artefacts en fonction de l'angle d'application a. La différence d'angle α entre les images est de préférence supérieure à 1° et plus préférentiellement supérieure à 5°.

Il est également avantageux que la première série d'images possède des images à différents angles α avec la lumière structurée émise depuis un côté de l'échantillon ainsi que plusieurs images à différents angles α avec la lumière structurée émise depuis l'autre côté de l'échantillon 1. Les deux côtés de l'échantillon 1 sont illuminés dans plusieurs conditions différentes pour améliorer la qualité du calcul des grandeurs caractéristiques de l'échantillon 1.

Dans une étape S3a, les images de la première série d'image sont utilisées pour former une image de travail qui formera une image de référence additionnelle ou qui remplacera une des images de référence
Dans l'étape S3a, il est avantageux de comparer les images de la première série d'images de manière à identifier la présence d'un ou de plusieurs artefacts qui correspondent à des zones ayant une faible luminosité ou à des zones ayant une forte luminosité, c'est-à-dire à des zones à faible contraste.

Une fois le ou les artefacts identifiés, les images de la première série sont utilisées pour former une image de travail qui représente l'échantillon et qui est dépourvue d'au moins un des artefacts identifiés ou dont l'étendue de l'artefact est réduite.

L'utilisation des images de la première série peut être effectuée de différentes manières. Il est possible d'identifier sur les images des zones représentant des artefacts et rechercher dans les autres images la même zone dépourvue de l'artefact afin de former une image de travail qui correspond à un empilement des multiples premières images qui forment la première série d'images et qui s'additionnent les unes aux autres, par exemple sous la forme de calques ayant des zones avec des poids différents.

De manière particulièrement avantageuse, il est intéressant de traiter les images de la première série d'images pour identifier les motifs de la première lumière structurée et préférentiellement extraire les évolutions de l'intensité de la lumière structurée définissant les motifs répétitifs. Par exemple, si la lumière structurée définit des franges en niveaux de gris qui sont représentées par une évolution sinusoïdale de l'intensité. Il est avantageux de rechercher cette évolution sinusoïdale dans les images. Les franges étant déformées par l'échantillon, les évolutions ne sont plus obligatoirement sinusoïdales, mais les variations sont transposables entre les images car la fréquence est connue ainsi que l'angle d'application a. Il est alors possible de comparer les images en comparant les évolutions d'intensité de la lumière structurée de manière à estimer les déformations des motifs sur la surface de l'échantillon, l'angle d'application α étant connu. Cette configuration est particulièrement intéressante car elle permet de faire abstraction des variations d'intensité lumineuse sur les motifs saillants 2 à cause de la variation de l'angle d'application a. L'image de travail est représentée par les évolutions d'intensité lumineuse sur l'échantillon. Cette image de travail est utilisée avec les images de référence qui possèdent également les évolutions d'intensité lumineuse sur l'échantillon de manière à fournir une caractérisation de meilleure qualité.

De manière avantageuse, une image de la première série d'images est une des images de référence. L'image de travail est alors formée pour remplacer l'image de référence de la première série d'images. L'image de travail est de meilleure qualité que l'image de référence qu'elle remplace car elle a éliminé ou réduit l'artefact.

De manière encore plus avantageuse, plusieurs premières séries d'images sont acquises et chaque première série d'images possède une des images de référence. Chaque première série d'images permet de former une image de travail destinée à remplacer une image de référence ce qui permet d'améliorer le calcul des grandeurs caractéristiques de l'échantillon 1.

Préférentiellement, les plusieurs premières séries d'images utilisent les mêmes valeurs d'angles d'application a.

De manière particulièrement avantageuse, les images de la première série d'images sont acquises en ne faisant varier que l'angle d'application α de manière à faciliter la comparaison des zones à forte luminosité, des zones à faible luminosité. Par exemple, les images de la première série d'images sont acquises sans faire varier la durée d'exposition, ni les motifs de la lumière texturée, ni la couleur de la lumière texturée, ni l'angle des moyens d'acquisition. Il est également avantageux que l'échantillon soit à la même température pour les différentes images de la première série d'images. La comparaison des images de la première série d'image est alors facilitée.

Pour améliorer encore plus la caractérisation de l'échantillon, il est avantageux d'acquérir au moins une deuxième série d'images dans une étape S2c. Parmi la pluralité d'images, on acquiert au moins une deuxième série d'images de la première surface de l'échantillon 1. La deuxième série d'images est acquise lorsque la première surface de l'échantillon 1 est éclairée par la première lumière structurée.

Les images de la deuxième série d'images se distinguent les unes des autres par des valeurs différentes de la durée d'exposition des moyens de capture d'images 5. Les zones fortement éclairées correspondent à des zones surexposées de l'image. A l'inverse, les zones faiblement éclairées correspondent à des zones sous-exposées. En modifiant la durée d'exposition entre les images de la deuxième série d'images, il est possible d'avoir des images qui présentent des artefacts dont la surface évolue en fonction de la durée d'exposition.

En réduisant la durée d'exposition, la zone surexposée réduit en surface ce qui permet limiter l'étendue de l'artefact et donc de la quantité d'information inutilisable. En augmentant la durée d'exposition, la zone sous-exposée réduit en surface qui permet limiter l'étendu de l'artefact et donc de la quantité d'information inutilisable. En modulant la durée d'exposition entre les multiples images de la deuxième série d'images, il est plus facile de suivre la variation d'intensité des motifs répétitifs de la première lumière texturée.

Le traitement des images de la deuxième série d'images permet de calculer plus précisément les variations d'intensité lumineuse représentatives des motifs répétitifs de la lumière structurée. Il est alors possible de former une image de travail dans laquelle les motifs répétitifs de la lumière structurée sont mieux définis. De manière avantageuse, les variations d'intensité lumineuse de la lumière structurée sur l'échantillon ont été extraites des images de la deuxième série d'images. Les variations d'intensité lumineuse sont utilisées de manière à définir une nouvelle image qui est dépourvue d'au moins un artéfact. De manière préférentielle, au moins quatre images avec quatre valeurs différentes de durée d'exposition sont acquises et sont utilisées pour former une image de travail.

Dans une étape S3b, les images de la deuxième série d'images sont utilisées pour former au moins une image de travail qui est destinée à former une image de référence additionnelle ou remplacer une image de référence. De manière préférentielle, la deuxième série d'images comporte au moins une des images de référence, de préférence l'image de référence de la deuxième série d'images est également commune à la première série d'images le cas échéant. Cela permet d'utiliser la première série d'images et la deuxième série d'images pour former une image de travail de meilleure qualité en réduisant le nombre d'artefacts et/ou l'étendue des artefacts.

Il est particulièrement avantageux d'acquérir plusieurs deuxièmes séries d'images qui possèdent chacune une image de référence et encore plus préférentiellement une image de référence qui est également commune à l'une des plusieurs premières séries le cas échéant. De cette manière, il est possible de fortement améliorer la qualité de plusieurs images de référence ce qui permet d'améliorer la qualité du calcul des grandeurs représentatives de l'échantillon.

De manière préférentielle, la durée d'exposition est raccourcie par rapport à la durée retenue pour l'image de référence de manière à faciliter la mesure des motifs répétitifs de la lumière structurée sur la surface du substrat qui reçoit les motifs saillants 2. Cette image permet d'améliorer la mesure relative à la planéité de la surface qui reçoit les motifs saillants 2.

De manière préférentielle, le rapport de durée d'exposition entre la durée la plus courte et la durée la plus longue est au moins égal à 1,3, de préférence au moins égal à 1,6, plus préférentiellement au moins égal à 2 voire au moins égal à 5. Plus la valeur de rapport de durée d'exposition est importante et plus il est facile de discriminer les informations entre les zones très lumineuses et les zones peu lumineuses qui correspondent généralement à des informations sur le substrat qui supporte les motifs saillants 2 et des informations des zones réfléchissantes des motifs saillants 2.

Lors de l'acquisition de la deuxième série d'images, il est particulièrement avantageux que les autres paramètres soient préférentiellement constants et notamment les paramètres liés à la lumière structurée, l'angle d'application et l'angle d'observation.

Dans encore un autre mode de réalisation avantageux, au moins une troisième série d'images est acquise. Le procédé comporte une étape S2d qui consiste à acquérir au moins une image de l'échantillon éclairé par une deuxième lumière structurée. La deuxième lumière structurée se distingue de la lumière structurée utilisée pour acquérir l'une des images de référence et préférentiellement la première série par la couleur de la lumière émise. Les motifs répétitifs sont identiques à ceux de la lumière structurée d'au moins une image de référence, c'est-à-dire en phase et en fréquence. La modification de la couleur peut être utilisée pour améliorer le contraste selon les matériaux utilisés pour former les motifs saillants 2 et/ou le substrat qui reçoit les motifs saillants 2.

Dans une étape S3c, les images de la troisième série d'images sont utilisées pour former une image qui est dépourvue d'au moins l'un des artéfacts. Il est avantageux que la troisième série d'images possède une des images de référence. Les images de la troisième série d'image sont alors utilisées pour former une image de travail qui est destinée à former une image de référence additionnelle ou destinée à remplacer l'une des images de référence.

Il peut être avantageux de réaliser plusieurs troisièmes séries d'images qui comportent chacune une des images de référence. Les plusieurs troisièmes séries d'images sont utilisées pour remplacer des images de référence.

Les moyens de projection 4 peuvent être configurés pour modifier la couleur de la lumière structurée. Il est avantageux que les moyens de projection 4 soient configurés pour délivrer une lumière blanche avec des motifs noirs ou en niveaux de gris. Il est également avantageux que les moyens de projection 4 soient configurés pour délivrer une lumière d'une autre couleur, par exemple rouge, bleu, vert, jaune, orange, violet avec des motifs noirs ou en niveaux de gris ou d'une autre couleur.

Dans encore un autre mode de réalisation, au moins une quatrième série d'images est acquise. Le procédé comporte une étape S2e qui consiste à acquérir au moins une image de l'échantillon éclairé par la première lumière structurée. Les images de la quatrième série d'images se distinguent des images de référence par l'utilisation d'un angle d'acquisition qui est différent de celui utilisé par les moyens de capture d'image 5.

Les moyens de capture d'image 5 sont agencés pour acquérir au moins une image selon un deuxième angle β, également appelé angle de capture qui est différent du premier angle. Le deuxième angle β est un angle entre l'axe optique des moyens de capture d'image 5 et l'axe normal au support 3 qui est destiné à supporter l'échantillon. Les moyens de capture sont alors montés mobiles et/ou plusieurs moyens de capture sont utilisés. La modification de l'angle de capture permet de modifier la position des zones surexposées et des zones sous-exposées.

Dans une étape S3d, les images de la quatrième série d'images sont utilisées pour former une image qui est dépourvue d'au moins l'un des artéfacts. Il est avantageux que la quatrième série d'images possède une des images de référence. Les images de la quatrième série d'image sont alors utilisées pour former une image de travail qui est destinée à former une image de référence additionnelle ou destinée à remplacer l'une des images de référence. La définition d'un couple entre l'angle de capture et l'angle de d'application permet de définir une sensibilité de mesure selon la direction A. En modifiant l'un ou l'autre de l'angle de capture et de l'angle d'application voire les deux, il est possible de déterminer le couple d'angles qui autorise l'obtention d'une sensibilité de mesure selon la direction A qui est supérieure à une valeur seuil, voire qui est la meilleure valeur seuil. Cependant, un inconvénient de ce mode de réalisation est qu'il est plus difficile de superposer les images car cela implique un calcul additionnel visant à déformer les images acquises pour qu'elles se rapprochent des images précédentes. Il est avantageux, dans la quatrième série d'images, de réaliser une autre première série d'images, voire une autre deuxième série d'images voire une autre troisième série d'images afin de calculer une autre surface des éléments saillants. Il est alors possible d'utiliser les deux surfaces calculées pour le même élément saillants dans des conditions différentes pour améliorer la précision du calcul.

De manière générale, le procédé de mesure comporte une étape S3 qui consiste à former au moins une image de travail en utilisant la première série d'image et avantageusement au moins l'une des deuxième, troisième et quatrième série d'images.

Il est avantageux de réaliser une deuxième série d'images pour les différentes conditions présentes dans la première série d'images, c'est-à-dire pour les différentes valeurs d'angle d'application a. Les multiples deuxièmes séries d'images permettent d'améliorer la qualité des images de la première série d'image ce qui permet de former une image de travail qui est de meilleure qualité avec uniquement la première série d'image ou avec seulement la première série d'images et une seule deuxième série d'images.

L'association de la première série d'images avec une ou plusieurs deuxièmes séries d'images qui partagent des images permet une meilleure élimination des artefacts et/ou une plus grande réduction de la surface des artefacts.

Les images de référence issue d'une première acquisition, issue d'un remplacement par une image de travail et/ou correspondant à une image de travail ajoutée sont utilisées comme cela est connu de l'homme du métier pour identifier les déformations des motifs répétitifs des lumières texturées afin de calculer au moins une grandeur représentative de l'échantillon.

De manière préférentielle, les images de la première série d'images sont comparées de manière à identifier les pixels les plus lumineux et les pixels les moins lumineux pour localiser une réflexion et/ou une réfraction. La position des pixels les plus lumineux est avantageuse pour rechercher les réflexions spéculaires.

La machine de mesure comporte un émetteur 4 de lumière structurée configuré pour éclairer au moins une première surface d'un échantillon 1 avec des motifs répétitifs ainsi qu'un dispositif d'acquisition d'image 5 configuré pour capter une pluralité d'images de la première surface de l'échantillon 1.

La machine de mesure comporte également un circuit de commande 6 configuré pour définir les conditions d'acquisition de la pluralité d'images par le dispositif d'acquisition d'image 5 et acquérir au moins une première image de la première surface de l'échantillon 1. La machine de mesure peut comporter également une mémoire 7 configurée pour stocker la pluralité d'images.

Il est également préférable que la machine de mesure comporte un premier dispositif de déplacement 8 configuré pour modifier l'angle d'inclinaison α de l'émetteur de lumière 4 par rapport à la première surface et donc à la surface du support 3. De manière préférable, la machine de mesure comporte un deuxième dispositif de déplacement 9 configuré pour modifier l'angle d'inclinaison du dispositif d'acquisition d'image 5 par rapport à la première surface et donc à la surface de support 3.

Le circuit de commande 6 est configuré pour acquérir plusieurs images de référence de l'échantillon 1 éclairé par différentes lumières structurées. Les lumières structurées des images de référence définissent chacune plusieurs motifs répétitifs et se distinguent les unes des autres par la phase et/ou la fréquence des motifs répétitifs. Le circuit de commande est configuré pour acquérir une première série d'images de l'échantillon éclairé par une première lumière structurée. La première lumière structurée définit plusieurs motifs répétitifs et les images de la première série d'images se distinguent les unes des autres par l'angle d'application α de la première lumière structurée par rapport à la surface du support 3.

Le circuit de commande 6 est configuré pour comparer les images de la première série d'images de manière à déterminer la présence d'au moins un artefact sur au moins une image de la première série d'images.

Un circuit de traitement 10 est configuré pour former au moins une image de travail au moins à partir de la première série d'images, la au moins une image de travail étant dépourvue dudit au moins un artéfact ou réduisant l'étendue dudit au moins un artéfact. Le circuit de traitement 10 est configuré pour calculer au moins une grandeur représentative de l'échantillon à partir de la au moins une image de travail et des images de référence.

Dans un mode de réalisation privilégié, l'échantillon 1 est disposé dans une enceinte qui se trouve dans une machine de mesure topographique. L'enceinte possède une première surface vitrée et le projecteur est disposé hors de l'enceinte. La lumière structurée passe à travers la partie transparente de l'enceinte pour atteindre la première surface de l'échantillon 1. Les moyens de capture d'image 5 peuvent comporter une caméra qui est agencée hors de l'enceinte le cas échéant. La caméra est agencée pour capturer la lumière structurée appliquée sur la surface de l'échantillon 1 et se propageant à travers la partie transparente de l'enceinte, plus précisément à travers la seconde surface vitrée de l'enceinte.

## Revendications

1. Procédé de mesure topographique comportant :
- fournir un échantillon (1) comportant une première surface munie d'une pluralité de motifs saillants (2) ;
- acquérir une pluralité d'images de la première surface de l'échantillon (1), la pluralité d'images comportant des images de référence de l'échantillon (1), chaque image de référence correspondant à l'échantillon (1) éclairé avec une lumière structurée, les lumières structurées des images de référence définissant chacune plusieurs motifs répétitifs et se distinguant les unes des autres par la phase et/ou la fréquence des motifs répétitifs ; **caractérisé en ce que** la pluralité d'images comporte au moins une première série d'images de la première surface de l'échantillon (1), la première série d'images étant acquise lorsque la première surface de l'échantillon (1) est éclairée par une première lumière structurée, la première lumière structurée définissant plusieurs motifs répétitifs et les images de la première série d'images se distinguant les unes des autres par l'angle d'application (a) de la première lumière structurée par rapport à la première surface ;
- comparer les images de la première série d'images de manière à déterminer la présence d'au moins un artefact sur au moins une image de la première série d'images ;
- former au moins une image de travail au moins à partir de la première série d'images, la au moins une image de travail étant dépourvue dudit au moins un artéfact ou réduisant l'étendue dudit au moins un artefact ;
- calculer au moins une grandeur représentative de l'échantillon à partir de la au moins une image de travail et des images de référence.

2. Procédé de mesure topographique selon la revendication 1 dans lequel la première série d'images comporte une image des images de référence et dans lequel la au moins une image de travail remplace ladite image des images de référence.

3. Procédé de mesure topographique selon la revendication 2 dans lequel la pluralité d'images possède plusieurs premières séries d'images qui comportent chacune une image des images de référence, dans lequel chaque première série d'images est utilisée pour former une image de travail dépourvue d'au moins un artefact ou ayant un artefact d'étendue réduite et dans lequel chaque image de travail remplace une des images de référence.

4. Procédé de mesure topographique selon l'une des revendications 1 à 3 dans lequel la pluralité d'images comporte au moins une deuxième série d'images de la première surface de l'échantillon (1), la deuxième série d'images étant acquise lorsque la première surface de l'échantillon (1) est éclairée par la première lumière structurée, les images de la deuxième série d'images se distinguant les unes des autres par leur durée d'exposition, l'angle d'application (a) de la première lumière structurée étant constant pour la deuxième série d'images et correspondant à un des angles de la première série d'images, dans lequel le procédé de mesure comporte :
- comparer les images de la deuxième série d'images de manière à déterminer la présence d'au moins un artefact sur au moins une image de la deuxième série d'images et
- former au moins une image de travail au moins à partir de la deuxième série d'image, la au moins une image de travail étant dépourvue dudit au moins un artéfact ou réduisant l'étendue de l'artefact.

5. Procédé de mesure topographique selon la revendication 4 dans lequel la deuxième série d'images comporte une image des images de référence et dans lequel la au moins une image de travail formée à partir de la deuxième série d'images remplace ladite image des images de référence.

6. Procédé de mesure topographique selon la combinaison des revendications 2 et 5 dans lequel une image des images de référence appartient à la première série d'images et à la deuxième série d'images et dans lequel la première série d'images et la deuxième série d'image sont utilisées pour former une image de travail qui remplace ladite image des images de référence.

7. Procédé de mesure topographique selon l'une des revendications 4 à 6 dans lequel la pluralité d'images possède plusieurs deuxièmes séries d'images qui comportent chacune une image des images de référence, dans lequel chaque deuxième série d'images est utilisée pour former une image de travail dépourvue d'au moins un artefact ou ayant un artefact d'étendue réduite et dans lequel chaque image de travail remplace des images des images de référence.

8. Procédé de mesure topographique selon l'une quelconques des revendications 1 à 7 dans lequel la pluralité d'images comporte au moins une troisième série d'images de la première surface de l'échantillon (1), la troisième série d'images étant acquise lorsque la première surface de l'échantillon (1) est éclairée par une deuxième lumière structurée, les images de la troisième série d'images se distinguant les unes des autres par la couleur de la lumière structurée, l'angle d'application (α) de la deuxième lumière structurée étant constant pour la troisième série d'images et correspondant à un des angles de la première série d'images, dans lequel le procédé de mesure comporte :
- comparer les images de la troisième série d'images de manière à déterminer la présence d'au moins un artefact sur au moins une image de la troisième série d'images et
- former au moins une image de travail au moins à partir de la troisième série d'images, la au moins une image de travail étant dépourvue dudit au moins un artefact ou réduisant l'étendue de l'artefact.

9. Procédé de mesure topographique selon l'une quelconque des revendications 1 à 8, dans lequel comparer les images de la première série d'images comporte identifier un déplacement d'une zone dont la luminosité est supérieure à la luminosité moyenne de l'image de la première série en fonction de l'angle d'application (α) de la première lumière structurée, l'artefact étant une réflexion parasite.

10. Procédé de mesure topographique selon l'une quelconque des revendications 1 à 9, dans lequel comparer les images de la première série d'images comporte identifier une évolution de l'étendue d'une zone dont la luminosité est inférieure à la luminosité moyenne de l'image de la première série en fonction de l'angle d'application (α) de la première lumière structurée, l'artefact étant un ombrage.

11. Procédé de mesure topographique selon l'une quelconque des revendications 1 à 10, dans lequel comparer les images de la première série d'images comporte extraire les évolutions d'intensité lumineuse des motifs répétitifs issus de la lumière structurée et comparer lesdites évolutions d'intensité lumineuse.

12. Machine de mesure topographique comportant :
- un support (3) ayant une surface destinée à supporter un échantillon (1) ;
- des moyens de projection (4) configurés pour émettre différentes lumières structurées, les lumières structurées définissant chacune plusieurs motifs répétitifs et se distinguant les unes des autres par la phase et/ou la fréquence des motifs répétitifs ;
- des moyens de capture d'image (5) configurés pour acquérir des images de l'échantillon (1) éclairé par l'une des différentes lumières structurées ;
- un circuit de commande (6) configuré pour acquérir plusieurs images de référence de l'échantillon (1) éclairé par différentes lumières structurées, les lumières structurées des images de référence définissant chacune plusieurs motifs répétitifs et se distinguant les unes des autres par la phase et/ou la fréquence des motifs répétitifs ;
machine de mesure topographique **caractérisée en ce que** :
- les moyens de projection (4) sont configurés pour définir plusieurs angles d'application (α) de la lumière structurée par rapport à la surface du support (3) ;
- le circuit de commande (6) est configuré pour acquérir une première série d'images de l'échantillon éclairé par une première lumière structurée, la première lumière structurée définissant plusieurs motifs répétitifs et les images de la première série d'images se distinguant les unes des autres par l'angle d'application (α) de la première lumière structurée par rapport à la surface du support (3) ;
- le circuit de commande (6) est configuré pour comparer les images de la première série d'images de manière à déterminer la présence d'au moins un artefact sur au moins une image de la première série d'images ;
- un circuit de traitement (10) est configuré pour former au moins une image de travail au moins à partir de la première série d'images, la au moins une image de travail étant dépourvue dudit au moins un artéfact ou réduisant l'étendue dudit au moins un artefact ;
- le circuit de traitement (10) est configuré pour calculer au moins une grandeur représentative de l'échantillon à partir de la au moins une image de travail et des images de référence.

## Patentansprüche

1. Topographisches Messverfahren, umfassend:
- Bereitstellen eines Prüflings (1) mit einer ersten Oberfläche, die mit einer Vielzahl von vorspringenden Mustern (2) versehen ist;
- Erfassen einer Vielzahl von Bildern der ersten Oberfläche des Prüflings (1), wobei die Vielzahl von Bildern Referenzbilder des Prüflings (1) umfasst, jedes Referenzbild dem mit einem strukturierten Licht beleuchteten Prüfling (1) entspricht, wobei die strukturierten Lichter der Referenzbilder jeweils mehrere sich wiederholende Muster definieren und sich durch die Phase und/oder die Frequenz der sich wiederholenden Muster voneinander unterscheiden;
**dadurch gekennzeichnet, dass** die Vielzahl von Bildern mindestens eine erste Serie von Bildern der ersten Oberfläche des Prüflings (1) umfasst, wobei die erste Serie von Bildern erfasst wird, wenn die erste Oberfläche des Prüflings (1) mit einem ersten strukturierten Licht beleuchtet wird, das erste strukturierte Licht mehrere sich wiederholende Muster definiert und die Bilder der ersten Serie von Bildern sich durch den Applikationswinkel (α) des ersten strukturierten Lichts relativ zur ersten Oberfläche voneinander unterscheiden;
- Vergleichen der Bilder der ersten Serie von Bildern, um das Vorhandensein mindestens eines Artefakts auf mindestens einem Bild der ersten Serie von Bildern zu bestimmen;
- Bilden mindestens eines Arbeitsbilds mindestens aus der ersten Serie von Bildern, wobei das mindestens eine Arbeitsbild frei von dem mindestens einen Artefakt ist oder das Ausmaß des mindestens einen Artefakts reduziert;
- Berechnen mindestens einer für den Prüfling repräsentativen Größe aus dem mindestens einen Arbeitsbild und den Referenzbildern.

2. Topografisches Messverfahren nach Anspruch 1, wobei die erste Serie von Bildern ein Bild von den Referenzbildern umfasst, und wobei das mindestens eine Arbeitsbild das Bild von den Referenzbildern ersetzt.

3. Topografisches Messverfahren nach Anspruch 2, wobei die Vielzahl von Bildern mehrere erste Serien von Bildern aufweist, die jeweils ein Bild von den Referenzbildern umfassen, wobei jede erste Serie von Bildern verwendet wird, um ein Arbeitsbild zu bilden, das frei von mindestens einem Artefakt ist oder ein Artefakt mit reduziertem Ausmaß aufweist, und wobei jedes Arbeitsbild eines der Referenzbilder ersetzt.

4. Topografisches Messverfahren nach einem der Ansprüche 1 bis 3, wobei die Vielzahl von Bildern mindestens eine zweite Serie von Bildern der ersten Oberfläche des Prüflings (1) umfasst, die zweite Serie von Bildern erfasst wird, wenn die erste Oberfläche des Prüflings (1) mit dem ersten strukturierten Licht beleuchtet wird, die Bilder der zweiten Serie von Bildern sich durch ihre Belichtungsdauer voneinander unterscheiden, der Applikationswinkel (α) des ersten strukturierten Lichts für die zweite Serie von Bildern konstant ist und einem der Winkel der ersten Serie von Bildern entspricht, wobei das Messverfahren umfasst:
- Vergleichen der Bilder der zweiten Serie von Bildern, um das Vorhandensein mindestens eines Artefakts auf mindestens einem Bild der zweiten Serie von Bildern zu bestimmen, und
- Bilden mindestens eines Arbeitsbilds mindestens aus der zweiten Serie von Bildern, wobei das mindestens eine Arbeitsbild frei von dem mindestens einen Artefakt ist oder das Ausmaß des mindestens einen Artefakts reduziert.

5. Topografisches Messverfahren nach Anspruch 4, wobei die zweite Serie von Bildern ein Bild von den Referenzbildern umfasst, und wobei das mindestens eine Arbeitsbild, das aus der zweiten Serie von Bildern gebildet wird, das Bild von den Referenzbildern ersetzt.

6. Topografisches Messverfahren nach der Kombination der Ansprüche 2 und 5, wobei ein Bild von den Referenzbildern zur ersten Serie von Bildern und zur zweiten Serie von Bildern gehört, und wobei die erste Serie von Bildern und die zweite Serie von Bildern verwendet werden, um ein Arbeitsbild zu bilden, das das Bild von den Referenzbildern ersetzt.

7. Topografisches Messverfahren nach einem der Ansprüche 4 bis 6, wobei die Vielzahl von Bildern mehrere zweite Serien von Bildern aufweist, die jeweils ein Bild von den Referenzbildern umfassen, wobei jede zweite Serie von Bildern verwendet wird, um ein Arbeitsbild zu bilden, das frei von mindestens einem Artefakt ist oder ein Artefakt mit reduziertem Ausmaß aufweist, und wobei jedes Arbeitsbild Bilder der Referenzbilder ersetzt.

8. Topografisches Messverfahren nach einem der Ansprüche 1 bis 7, wobei die Vielzahl von Bildern mindestens eine dritte Serie von Bildern der ersten Oberfläche des Prüflings (1) umfasst, die dritte Serie von Bildern erfasst wird, wenn die erste Oberfläche des Prüflings (1) mit einem zweiten strukturierten Licht beleuchtet wird, die Bilder der dritten Serie von Bildern sich durch die Farbe des strukturierten Lichts voneinander unterscheiden, der Applikationswinkel (α) des zweiten strukturierten Lichts für die dritte Serie von Bildern konstant ist und einem der Winkel der ersten Serie von Bildern entspricht, wobei das Messverfahren umfasst:
- Vergleichen der Bilder der dritten Serie von Bildern, um das Vorhandensein mindestens eines Artefakts auf mindestens einem Bild der dritten Serie von Bildern zu bestimmen, und
- Bilden mindestens eines Arbeitsbilds mindestens aus der dritten Serie von Bildern, wobei das mindestens eine Arbeitsbild frei von dem mindestens einen Artefakt ist oder das Ausmaß des Artefakts reduziert.

9. Topografisches Messverfahren nach einem der Ansprüche 1 bis 8, wobei das Vergleichen der Bilder der ersten Serie von Bildern das Identifizieren einer Verschiebung eines Bereichs umfasst, dessen Helligkeit in Abhängigkeit vom Applikationswinkel (α) des ersten strukturierten Lichts größer ist als die mittlere Helligkeit des Bilds der ersten Serie, wobei das Artefakt eine störende Reflexion ist.

10. Topografisches Messverfahren nach einem der Ansprüche 1 bis 9, wobei das Vergleichen der Bilder der ersten Serie von Bildern das Identifizieren einer Entwicklung der Ausdehnung eines Bereichs umfasst, dessen Helligkeit in Abhängigkeit vom Applikationswinkel (α) des ersten strukturierten Lichts geringer ist als die mittlere Helligkeit des Bilds der ersten Serie, wobei das Artefakt eine Schattierung ist.

11. Topografisches Messverfahren nach einem der Ansprüche 1 bis 10, wobei das Vergleichen der Bilder der ersten Serie von Bildern das Extrahieren der durch das strukturierte Licht entstandenen Lichtintensitätsverläufe der sich wiederholenden Muster und das Vergleichen der Lichtintensitätsverläufe umfasst.

12. Topographische Messmaschine, umfassend:
- einen Träger (3) mit einer Oberfläche zum Tragen eines Prüflings (1);
- Projektionsmittel (4), die dazu konfiguriert sind, verschiedene strukturierte Lichter zu emittieren, wobei die strukturierten Lichter jeweils mehrere sich wiederholende Muster definieren und sich durch die Phase und/oder die Frequenz der sich wiederholenden Muster voneinander unterscheiden;
- Bilderfassungsmittel (5), die dazu konfiguriert ist, Bilder des mit einem der verschiedenen strukturierten Lichter beleuchteten Prüflings (1) zu erfassen;
- eine Steuerschaltung (6), die dazu konfiguriert ist, mehrere Referenzbilder des mit verschiedenen strukturierten Lichtern beleuchteten Prüflings (1) zu erfassen, wobei die strukturierten Lichter der Referenzbilder jeweils mehrere sich wiederholende Muster definieren und sich durch die Phase und/oder die Frequenz der sich wiederholenden Muster voneinander unterscheiden;
wobei die topographische Messmaschine **dadurch gekennzeichnet ist, dass**:
- die Projektionsmittel (4) dazu konfiguriert sind, mehrere Applikationswinkel (α) des strukturierten Lichts relativ zur Oberfläche des Trägers (3) zu definieren;
- die Steuerschaltung (6) dazu konfiguriert ist, eine erste Serie von Bildern des mit einem ersten strukturierten Licht beleuchteten Prüflings zu erfassen, wobei das erste strukturierte Licht mehrere sich wiederholende Muster definiert und die Bilder der ersten Serie von Bildern sich durch den Applikationswinkel (α) des ersten strukturierten Lichts relativ zur Oberfläche des Trägers (3) voneinander unterscheiden;
- die Steuerschaltung (6) dazu konfiguriert ist, die Bilder der ersten Serie von Bildern zu vergleichen, um das Vorhandensein mindestens eines Artefakts auf mindestens einem Bild der ersten Serie von Bildern zu bestimmen;
- eine Verarbeitungsschaltung (10) dazu konfiguriert ist, aus der ersten Serie von Bildern mindestens ein Arbeitsbild zu bilden, wobei das mindestens eine Arbeitsbild frei von dem mindestens einen Artefakt ist oder das Ausmaß des mindestens einen Artefakts reduziert;
- die Verarbeitungsschaltung (10) dazu konfiguriert ist, mindestens eine für die Probe repräsentative Größe aus dem mindestens einen Arbeitsbild und den Referenzbildern zu berechnen.

## Claims

1. Method for performing topographic measurement that comprises:
- providing a sample (1) comprising a first surface provided with a plurality of salient patterns (2);
- acquiring a plurality of images of the first surface of the sample (1), the plurality of images comprising reference images of the sample (1), each reference image corresponding to the sample (1) illuminated with a structured light, the structured lights of the reference images each defining several repetitive patterns and differing from one another by the phase and/or the frequency of the repetitive patterns;
**characterised in that** the plurality of images comprises at least one first series of images of the first surface of the sample (1), the first series of images being acquired when the first surface of the sample (1) is illuminated by a first structured light, the first structured light defining several repetitive patterns and the images of the first series of images differing from one another by the application angle (α) of the first structured light with respect to the first surface;
- comparing the images of the first series of images so as to determine the presence of at least one artefact on at least one image of the first series of images;
- forming at least one working image at least from the first series of images, the at least one working image being devoid of said at least one artefact or reducing the extent of said at least one artefact;
- calculating at least one quantity representative of the sample from the at least one working image and the reference images.

2. Method for performing topographic measurement according to claim 1 wherein the first series of images comprises an image of the reference images and wherein the at least one working image replaces said image of the reference images.

3. Method for performing topographic measurement according to claim 2 wherein the plurality of images has several first series of images that each comprise an image of the reference images, wherein each first series of images is used to form a working image devoid of at least one artefact or having an artefact of reduced extent and wherein each working image replaces one of the reference images.

4. Method for performing topographic measurement according to one of claims 1 to 3 wherein the plurality of images comprises at least a second series of images of the first surface of the sample (1), the second series of images being acquired when the first surface of the sample (1) is illuminated by the first structured light, the images of the second series of images differing from one another by their exposure time, the application angle (α) of the first structured light being constant for the second series of images and corresponding to one of the angles of the first series of images, wherein the method for performing measurement comprises:
- comparing the images of the second series of images so as to determine the presence of at least one artefact on at least one image of the second series of images and
- forming at least one working image at least from the second series of images, the at least one working image being devoid of said at least one artefact or reducing the extent of the artefact.

5. Method for performing topographic measurement according to claim 4 wherein the second series of images comprises an image of the reference images and wherein the at least one working image formed from the second series of images replaces said image of the reference images.

6. Method for performing topographic measurement according to the combination of claim 2 and 5 wherein an image of the reference images belongs to the first series of images and to the second series of images and wherein the first series of images and the second series of images are used to form a working image that replaces said image of the reference images.

7. Method for performing topographic measurement according to one of claims 4 to 6 wherein the plurality of images has several second series of images that each comprise an image of the reference images, wherein each second series of images is used to form a working image devoid of at least one artefact or having an artefact of reduced extent and wherein each working image replaces images of the reference images.

8. Method for performing topographic measurement according to any one of claims 1 to 7 wherein the plurality of images comprises at least a third series of images of the first surface of the sample (1), the third series of images being acquired when the first surface of the sample (1) is illuminated by a second structured light, the images of the third series of images differing from one another by the colour of the structured light, the application angle (α) of the second structured light being constant for the third series of images and corresponding to one of the angles of the first series of images, wherein the method for performing measurement comprises:
- comparing the images of the third series of images so as to determine the presence of at least one artefact on at least one image of the third series of images and
- forming at least one working image at least from the third series of images, the at least one working image being devoid of said at least one artefact or reducing the extent of the artefact.

9. Method for performing topographic measurement according to any one of claims 1 to 8, wherein comparing the images of the first series of images comprises identifying a displacement of an area presenting a greater luminosity than the mean luminosity of the image of the first series according to the application angle (α) of the first structured light, the artefact being a spurious reflection.

10. Method for performing topographic measurement according to any one of claims 1 to 9, wherein comparing the images of the first series of images comprises identifying a modification of the extent of an area presenting a luminosity that is lower than the mean luminosity of the image of the first series according to the application angle (α) of the first structured light, the artefact being a shadow.

11. Method for performing topographic measurement according to any one of claims 1 to 10, wherein comparing the images of the first series of images comprises extracting the light intensity modifications of the repetitive patterns originating from the structured light and comparing said light intensity modifications.

12. Topographic measuring machine comprising:
- a support (3) having a surface designed to support a sample (1);
- projection means (4) configured to emit different structured lights, the structured lights each defining several repetitive patterns and differing from one another by the phase and/or the frequency of the repetitive patterns;
- the image capture means (5) configured to acquire images of the sample (1) illuminated by one of the different structured lights;
- a control circuit (6) configured to acquire several reference images of the sample (1) illuminated by different structured lights, the structured lights of the reference images each defining several repetitive patterns and differing from one another by the phase and/or the frequency of the repetitive patterns.
topographic measuring machine **characterised in that**:
- the projection means (4) are configured to define several angles of application (α) of the structured light with respect to the surface of the support (3);
- the control circuit (6) is configured to acquire a first series of images of the sample illuminated by the first structured light, the first structured light defining several repetitive patterns and the images of the first series of images differing from one another by the application angle (α) of the first structured light with respect to the surface of the support (3);
- the control circuit (6) is configured to compare the images of the first series of images so as to determine the presence of at least one artefact on at least one image of the first series of images;
- a processing circuit (10) is configured to form at least one working image at least from the first series of images, the at least one working image being devoid of said at least one artefact or reducing the extent of said at least one artefact;
- the processing circuit (10) is configured to calculate at least one quantity representative of the sample from the at least one working image and the reference images.
